# EUROPEAN PATENT SPECIFICATION

(11) **EP 4 306 289 B1**
(45) Date of publication and mention of the grant of the patent: **02.12.2026**
(21) Application number: 23175655.2
(22) Date of filing: 26.05.2023
(51) Int. Cl.: B29C 45/17, B29C 45/14

(54) **A CARRIER FOR A BICYCLE AND PROCESS OF MANUFACTURING THE SAME**
TRÄGER FÜR EIN FAHRRAD UND VERFAHREN ZU SEINER HERSTELLUNG
DISPOSITIF DE SUPPORT POUR UN VÉLO ET PROCÉDÉ DE FABRICATION DE CELUI-CI

(30) Priority: 11.07.2022 PT 2022118094
(43) Date of publication of application: 17.01.2024
(73) Proprietor: Polisport Plásticos, SA, 3720-024 Carregosa (PT)
(72) Inventor: PINTO OLIVEIRA DE ARAUJO, Pedro Jorge, VALE DE CAMBRA (PT); GOMES DE SÁ, Pedro Miguel, SANTA MARIA DA FEIRA (PT); PEREIRA PINTO, Miguel Filipe, SANTA MARIA DA FEIRA Localidade MOZELOS (PT); SOARES AMARAL, Carlos Filipe, AROUCA (PT)
(74) Representative: do Nascimento Gomes, Rui

(56) References cited:
- CN-A- 102 529 111
- CN-A- 103 552 220
- DE-A1- 102016 015 538
- US-A- 5 217 149
- US-A1- 2018 186 049

## Description

### TECHNICAL FIELD

The present disclosure relates to carriers for velocipedes in general and more particularly to processes of manufacturing carriers for velocipedes, such as bicycles.

### PRIOR ART

A carrier is a device that is installed on a velocipede, such as a bicycle, to which cargo or panniers can be attached. Such carriers may be mounted on the front or rear of a velocipede, although the rear mount is more common.

Carriers are commonly constructed from aluminium, steel or some combination of the two, in order to guarantee load resistance and strength necessary to perform its function. Components may consist of tubing, extrusions or castings that are then welded, riveted or bolted together. Therefore, the manufacturing process of current carriers is a multi-step process that involves not only the creation of the parts but their assembly.

More particularly, a typical carrier is comprised by at least 15 parts that are welded together through at least 26 welding points. These welding points are susceptible to, in the medium to long term, weaken the carrier's structure, being responsible for bending and/or cuts, shortening the carrier's lifespan.

Furthermore, since a carrier is normally exposed to the action of an external environment, being made of metal makes it more susceptible to the risk of corrosion, which also affects the carrier's lifespan.

Documents US2018/186049 A1 and CN103552220 A disclose a manufacturing process for a hollow bicycle component, formed in one piece, using polymeric material. However, these disclosures are not specifically directed to the manufacture of a carrier for a bicycle, which is an element that has a complex structure, and therefore does not allow obtaining an element with improved robustness. Document US 5 217 149 A discloses a carrier element for a bicycle.

The present solution intended to innovatively overcome such issues.

### SUMMARY OF THE DISCLOSURE

It is therefore an object of the present disclosure a process for manufacturing a hollow tubular element, such as a carrier for a velocipede.

This new manufacturing process allows to produce a single piece carrier, therefore, dispensing the need to have connection points, for example by welding. As such, this process allows to create a continuous single piece carrier, which has the advantage of being durable compared to the carriers of the state of the art, that are formed by connecting multiple pieces together.

Besides that, the fact that this manufacturing process uses a polymeric material instead of aluminium or steel, has the advantage of making the element produced by it not only resistant to corrosion but also recyclable.

It is also an object of the present disclosure a single piece carrier for a velocipede. Said carrier being manufacture according to the manufacturing process described herein.

### DESCRIPTION OF FIGURES

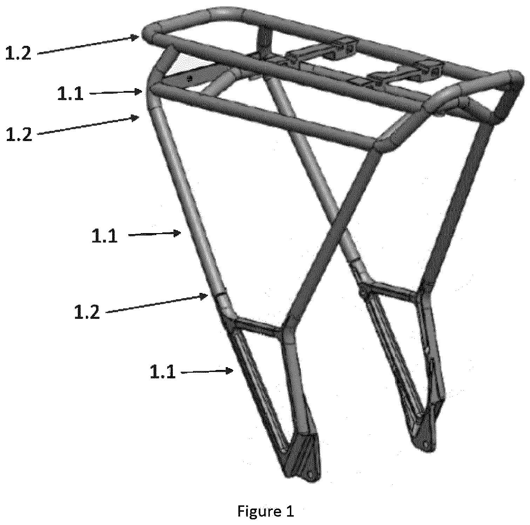

Figure 1 - representation of an embodiment of a state-of-the-art carrier, formed by multiple parts (1.1) that are connected together by welding points (1.2).

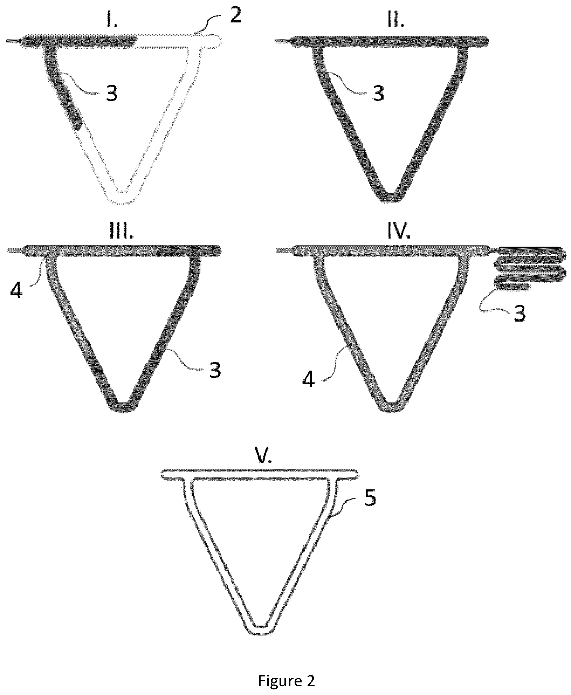

Figure 2 - illustration of the process for manufacturing a single piece tubular element, such as a carrier for a velocipede, the process being defined by the following stages:
   I. injecting a polymeric material (3) into a mould cavity (2);
   II. obtaining a single piece body of a polymeric material (3);
   III. injecting a fluid (4) into the mould cavity (2);
   IV. expelling the polymeric material (3) from the mould cavity (2) due to the injection of the fluid (4), in order to obtain a hollow tubular element of a polymeric material.
   V. expelling the fluid (4) from the mould cavity in order to obtain a polymeric material hollow tubular element (5).

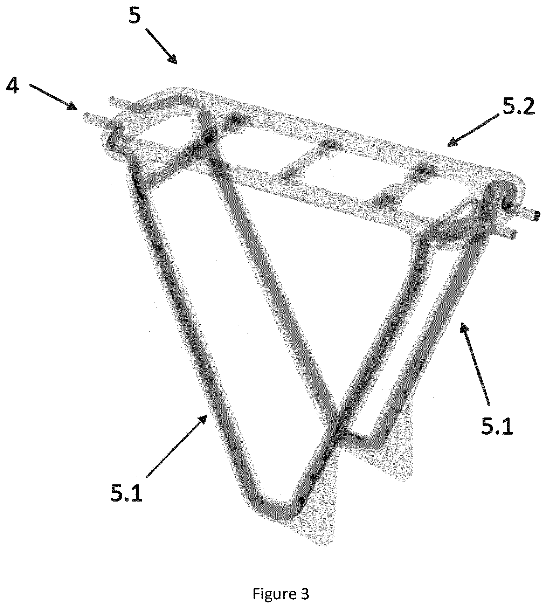

Figure 3 - representation of an embodiment of the carrier (5) manufactured according to the process disclosed, illustrating two fluid channels through which water, as the fluid (4) used in the process, flows. The carrier is a hollow tubular element (5) of a polymeric material, having a support section formed by a pair of struts (5.1), and a rack section (5.2).

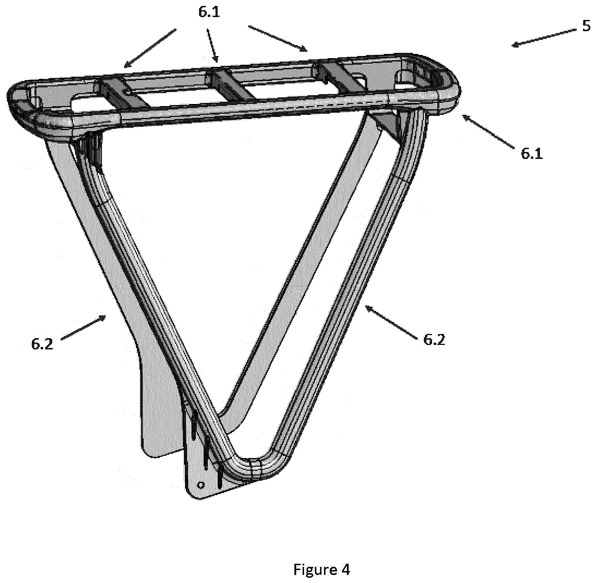

Figure 4 - representation of an embodiment of the carrier manufactured according to the process disclosed, where the section corresponding to the rack is reinforced with fabric sheet (6.1), in opposition to the struts section that is not reinforced (6.2).

### DETAILED DESCRIPTION

The present disclosure relates to a process of manufacturing a hollow tubular element (5). Said manufacturing process comprises the following steps:
i. injecting a polymeric material (3) into a mould cavity (2) through at least one entry point in said mould cavity (2);
ii. filling the entire mould cavity (2) with the polymeric material (3) forming a solid element of polymeric material;
iii. injecting a fluid (4) into the mould cavity (2), through at least one entry point in said mould cavity (2), so that a central core section of the solid element of polymeric material is expelled through at least one exit point in the mould cavity (2), thereby forming a tubular element having a peripheral section of polymeric material;
iv. expelling the fluid (4) through at least one exit point in the mould cavity (2), thereby forming a hollow tubular element (5).

In a preferred embodiment, prior to injecting the polymeric material (3) into the mould cavity (2), fabric reinforcement sheets may be applied to the surface of the mould cavity (2). This is particularly relevant to allow an increase of stiffness and higher impact resistance, and possibly to reduce the wall thickness in particular sections (6.1) of the hollow tubular element (5). Therefore, these sheets of reinforced fabric may be applied to the correspondent sections of the mould cavity (2), being positioned between the surface of the mould cavity (2) and the polymeric material (3) to be injected. Consequently, the mechanical properties of the hollow tubular element (5) produced are improved which also contributes for increasing the durability of said element (5). A sheet of reinforced fabric may be a meshed composite structure comprised by PP, i.e., polypropylene, or PA, i.e., polyamide. Additionally, the composite structure may further comprise Tegris^{®}, Pure^{®} or Curv^{®} material reinforcements.

In another preferred embodiment, the fluid (4) used in this process is water

In another preferred embodiment, the polymeric material (3) is PA6, also known as Polyamide 6, Nylon 6 or polycaprolactam. Alternatively, the polymeric material (4) may be Ixef^{®} PARA, also known as polyarylamide.

The polymeric material (4) may also be a mixture between PA6 or PARA and at least 30% fibres of glass, carbon or of other mineral type. The combination of polymeric material (3) and fibres has the advantage of obtaining a reinforced polymer, that makes the hollow tubular element (5) obtained through this process with improved robustness, in terms of stiffness and mechanical properties in the overall. This aspect is particularly relevant since the hollow tubular element (5) can have multiple designs in terms of angular curve shapes, diameters or wall thickness transitions, as it is the case of a carrier for a velocipede.

In order to guarantee the proper accommodation of the fibres that are mixed in the polymeric material (3), to the angular curve shapes of the mould cavity (2), fibres up to 1 mm in length are used.

Therefore, the use of fibres allows the hollow tubular element (5) produced by this process to achieve the necessary robustness without the need to be heavier or to have higher wall thicknesses. It also contributes for improving the ageing properties of the polymeric material (3) forming the hollow tubular element (5), making it more durable comparing to the solutions of the state of art.

This new process allows to obtain a single piece hollow tubular element (5), such as a carrier for a velocipede. Therefore, the need to have multiple connection points for connecting each part making up the final element is dispensed, this contributing for developing a durable and more robust element (5). This aspect is extremely relevant considering that the hollow tubular element (5) is a carrier for a velocipede, which, given its function, must be able to support loads. The fact that it is made of polymeric material (3) means that, in addition to being robust and durable, the element is also resistant to corrosion and recyclable.

In a preferred embodiment of the manufacturing process, prior to injecting the polymeric material (3) into the mould cavity (2), the mould is positioned so that the mould cavity (2) is arranged in relation to a base of the mould in order to ensure that the fluid (4) injected into the mould cavity (2) is expelled from said mould cavity (2) by the action of gravity. This ensures that all fluid (4) is expelled from the mould cavity (2).

In another preferred embodiment of the manufacturing process, an entry point and an exit point, used for injecting and expelling fluid (4), form a fluid circuit, and a mould cavity (2) may be comprised by plurality of fluid circuits. More particularly, an entry point is located in the mould cavity (2) in a position different than the location of an exit point of the same fluid circuit, therefore, the fluid circuits do not intersect with each other.

In another preferred embodiment of the manufacturing process, the central core section is up to 80% of the solid element of polymeric material and the peripheral section is at least 20% of the solid element of polymeric material. That is, in one embodiment, the diameter of the tubular is 12 mm and the thickness of the peripheral section is approximately 2,4 mm.

The present disclosure also relates to a carrier for a velocipede, the carrier being a single piece hollow tubular element (5) manufacture according to the describe process. Said carrier is comprised by a support section (5.1), adapted to fix the carrier to the velocipede, and by a rack section (5.2).

In one embodiment of the carrier, the support section comprises a pair of struts (5.1) situated on either side of the velocipede. Said struts (5.1) are fixedly attached by their distal ends to a wheel hub of the velocipede. As an example, the velocipede is a bicycle, and the carrier is a rear carrier, thus, the struts (5.1) being fixedly attached by their distal ends to a rear wheel hub of the bicycle.

In another embodiment of the carrier, the support section (5.1) further comprises hollow reinforced parts, to increase its robustness.

In another embodiment of the carrier, the rack section (5.2) comprises a coupling surface for coupling an accessory to the carrier, such as a childseat or a pannier.

In another embodiment of the carrier, it further comprises a support part adapted to attach a reflector and/or a light device.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations. The invention is set out in the appended set of claims.

## Claims

1. Process of manufacturing a single-piece hollow tubular carrier element (5) for a bicycle, comprising the following steps:
i. injecting a polymeric material (3) into a mould cavity (2) through at least one entry point in said mould cavity (2); the polymeric material has at least 30% of fibres; the fibres being of a mineral type such as glass or carbon; optionally, the length of the fibres is up to 1 mm;
ii. filling the entire mould cavity (2) with the polymeric material (3) forming a solid element of polymeric material;
iii. injecting a fluid (4) into the mould cavity (2), through at least one entry point in said mould cavity (2), so that a central core section of the solid element of polymeric material is expelled through at least one exit point in the mould cavity (2), thereby forming a tubular element having a peripheral section of polymeric material (3); wherein,
the central core section is up to 80% of the solid element of polymeric material and the peripheral section is at least 20% of the solid element of polymeric material; and
an entry point and an exit point for injecting and expelling fluid form a fluid circuit; the entry point being located in the mould cavity in a position different than the location of the exit point; and the mould cavity comprises a plurality of fluid circuits, said fluid circuits not intersecting with each other;
iv. expelling the fluid (4) through at least one exit point in the mould cavity (2), thereby forming a hollow tubular element (5).

2. Process according to claim 1, further comprising the step of:
prior to injecting the polymeric material (3) into the mould cavity (2), apply at least one fabric reinforcement sheet to a surface of at least a section of the mould cavity (2); the reinforcement sheet being positioned between the surface of the mould cavity (2) and the polymeric material (3) to be injected and being a meshed composite structure; preferably, said composite structure is comprised by PP or PA.

3. Process according to claims 1 or 2, further comprising the step of:
prior to injecting the polymeric material (3) into the mould cavity (2), the mould is positioned so that the mould cavity (2) is arranged in relation to a base of the mould, so that,
the fluid (4) injected into the mould cavity (2) is expelled from said mould cavity (2) by the action of gravity.

4. Process according to any of the previous claims, wherein the fluid is water.

5. Process according to any of the previous claims, wherein the polymeric material is PA6.

6. A carrier for a bicycle, comprising:
- a support section, adapted to fix the carrier to the bicycle; and
- a rack section;
**characterized in that**,
the carrier being a single piece hollow tubular element manufactured according to the process of any of the claims 1 to 5.

7. Carrier according to claim 6, wherein the support section comprises a pair of struts situated on either side of the bicycle; said struts being fixedly attached by their distal ends to a wheel hub of the bicycle.

8. Carrier according to claims 6 or 7, wherein the support section further comprises hollow reinforced parts.

9. Carrier according to any of the previous claims 6 to 8, wherein the rack section comprises a coupling surface for coupling an accessory to the carrier; said accessory being a childseat or a pannier.

10. Carrier according to any of the previous claims 6 to 9, wherein the carrier further comprises a support part adapted to attach a reflector and/or a light device.

11. Carrier according to claims 7, wherein
the carrier is a rear carrier; and
the struts are fixedly attached by their distal ends to a rear wheel hub of the bicycle.

## Patentansprüche

1. Verfahren zur Herstellung eines einteiligen hohlen, rohrförmigen Trägerelements (5) für ein Fahrrad, umfassend die folgenden Schritte:
i. Einspritzen eines Polymermaterials (3) in einen Formhohlraum (2) durch mindestens eine Einlassstelle in dem Formhohlraum (2); das Polymermaterial enthält mindestens 30% Fasern; die Fasern sind mineralischer Art, wie beispielsweise Glas oder Kohlenstoff; optional beträgt die Länge der Fasern bis zu 1 mm;
ii. Befüllen des gesamten Formhohlraums (2) mit dem Polymermaterial (3) unter Bildung eines massiven Elements aus polymerem Material;
iii. Einspritzen eines Fluids (4) in den Formhohlraum (2) durch mindestens eine Einlassstelle in dem Formhohlraum (2), so dass ein zentraler Kernabschnitt des massiven Elements aus Polymermaterial durch mindestens eine Auslassstelle im Formhohlraum (2) ausgestoßen wird, wodurch ein röhrenförmiges Element mit einem Umfangsabschnitt aus Polymermaterial (3) gebildet wird; wobei
der zentrale Kernabschnitt bis zu 80% des massiven Elements aus Polymermaterial ausmacht und der Umfangsabschnitt mindestens 20% des massiven Elements aus Polymermaterial ausmacht; und
eine Einlassstelle und eine Auslassstelle zum Einspritzen und Ausstoßen von Fluid einen Fluidkreislauf bilden; wobei sich die Einlassstelle im Formhohlraum an einer anderen Position als die Auslassstelle befindet; und der Formhohlraum eine Vielzahl von Fluidkreisläufen umfasst, wobei sich diese Fluidkreisläufe nicht gegenseitig schneiden;
iv. Ausstoßen des Fluids (4) durch mindestens eine Auslassstelle im Formhohlraum (2), wodurch ein hohles röhrenförmiges Element (5) gebildet wird.

2. Verfahren nach Anspruch 1, das ferner den folgenden Schritt umfasst:
vor dem Einspritzen des Polymermaterials (3) in den Formhohlraum (2) ist mindestens einer Gewebeverstärkungsbahn auf eine Oberfläche mindestens eines Abschnitts des Formhohlraums (2) aufzubringen; wobei die Verstärkungsbahn zwischen der Oberfläche des Formhohlraums (2) und dem einzuspritzenden Polymermaterial (3) positioniert ist und eine maschenartige Verbundstruktur darstellt; vorzugsweise besteht die besagte Verbundstruktur aus PP oder PA.

3. Verfahren nach Anspruch 1 oder 2, das ferner den folgenden Schritt umfasst:
vor dem Einspritzen des Polymermaterials (3) in den Formhohlraum (2) wird die Form so positioniert, dass der Formhohlraum (2) in Bezug auf einen Boden der Form so angeordnet ist, dass
das in den Formhohlraum (2) eingespritzte Fluid (4) durch die Wirkung der Schwerkraft aus dem Formhohlraum (2) ausgestoßen wird.

4. Verfahren nach einem der vorstehenden Ansprüche, wobei das Fluid Wasser ist.

5. Verfahren nach einem der vorstehenden Ansprüche, wobei das Polymermaterial PA6 ist.

6. Träger für ein Fahrrad, umfassend:
- einen Stützabschnitt, der angepasst ist, um den Träger an dem Fahrrad zu befestigen; und
- einen Gestellabschnitt;
**dadurch gekennzeichnet, dass**
der Träger ein einteiliges, hohles Rohrelement ist, das nach dem Verfahren eines der Ansprüche 1 bis 5 hergestellt ist.

7. Träger nach Anspruch 6, wobei der Stützabschnitt ein Paar Streben umfasst, die sich auf beiden Seiten des Fahrrads befinden; wobei die Streben mit ihren distalen Enden fest an einer Radnabe des Fahrrads befestigt sind.

8. Träger nach Anspruch 6 oder 7, wobei der Stützabschnitt ferner hohle, verstärkte Teile umfasst.

9. Träger nach einem der vorstehenden Ansprüche 6 bis 8, wobei der Gestellabschnitt eine Kupplungsfläche zum Koppeln eines Zubehörteils am Träger umfasst; wobei das Zubehörteil ein Kindersitz oder eine Fahrradtasche ist.

10. Träger nach einem der vorstehenden Ansprüche 6 bis 9, wobei der Träger ferner ein Stützteil umfasst, das zur Befestigung eines Reflektors und/oder einer Beleuchtungseinrichtung ausgelegt ist.

11. Träger nach den Ansprüchen 7 und 10, wobei
der Träger ein Heckträger ist; und
die Streben mit ihren distalen Enden fest an einer Hinterradnabe des Fahrrads befestigt sind.

## Revendications

1. Procédé de fabrication d'un élément tubulaire creux monobloc de dispositif de support (5) pour un vélo, comprenant les étapes suivantes :
i. i. injecter un matériau polymère (3) dans une cavité de moule (2) par au moins un point d'entrée dans ladite cavité de moule (2) ; le matériau polymère comprend au moins 30 % de fibres ; les fibres étant de nature minérale, telles que verre ou carbone ; éventuellement, les fibres ayant une longueur allant jusqu'à 1 mm ;
ii. remplir entièrement la cavité de moule (2) avec le matériau polymère (3), formant ainsi un élément solide en matériau polymère ;
iii. injecter un fluide (4) dans la cavité de moule (2), par au moins un point d'entrée dans ladite cavité de moule (2), de manière à expulser une section de noyau central de l'élément solide en matériau polymère par au moins un point de sortie dans la cavité de moule (2), formant ainsi un élément tubulaire présentant une section périphérique en matériau polymère (3) ; dans lequel,
la section de noyau central représente jusqu'à 80 % de l'élément solide en matériau polymère et la section périphérique représente au moins 20 % de l'élément solide en matériau polymère ; et
un point d'entrée et un point de sortie destinés à l'injection et à l'expulsion du fluide forment un circuit fluidique ; le point d'entrée étant situé dans la cavité de moule dans une position différente de celle du point de sortie ; et la cavité de moule comprend une pluralité de circuits fluidiques, lesdits circuits fluidiques ne se croisant pas entre eux ;
iv. expulser le fluide (4) par au moins un point de sortie dans la cavité de moule (2), formant ainsi un élément tubulaire creux (5).

2. Procédé selon la revendication 1, comprenant en outre l'étape consistant à :
avant d'injecter le matériau polymère (3) dans la cavité de moule (2), appliquer au moins une feuille de renforcement en tissu sur une surface d'au moins une section de la cavité de moule (2) ; la feuille de renforcement étant positionnée entre la surface de la cavité de moule (2) et le matériau polymère (3) destiné à être injecté et étant une structure composite maillée ; de préférence, ladite structure composite est constituée de PP ou de PA.

3. Procédé selon la revendication 1 ou 2, comprenant en outre l'étape consistant à :
avant d'injecter le matériau polymère (3) dans la cavité de moule (2), positionner le moule de sorte que la cavité de moule (2) soit disposée par rapport à une base du moule de manière que
le fluide (4) injecté dans la cavité de moule (2) soit expulsé de ladite cavité de moule (2) sous l'action de la gravité.

4. Procédé selon l'une quelconque des revendications précédentes, dans lequel le fluide est de l'eau.

5. Procédé selon l'une quelconque des revendications précédentes, dans lequel le matériau polymère est du PA6.

6. Dispositif de support pour un vélo, comprenant :
- une section de support, adaptée pour fixer le dispositif de support au vélo ; et
- une section de porte-bagage ;
**caractérisé en ce que**
le dispositif de support est un élément tubulaire creux monobloc fabriqué selon le procédé de l'une quelconque des revendications 1 à 5.

7. Dispositif de support selon la revendication 6, dans lequel la section de support comprend une paire de bras de support situés de part et d'autre du vélo ; lesdits bras de support étant fixés de manière rigide, par leurs extrémités distales, à un moyeu de roue du vélo.

8. Dispositif de support selon la revendication 6 ou 7, dans lequel la section de support comprend en outre des parties creuses renforcées.

9. Dispositif de support selon l'une quelconque des revendications 6 à 8, dans lequel la section de porte-bagage comprend une surface de couplage destinée à coupler un accessoire au dispositif de support ; ledit accessoire étant un siège enfant ou une sacoche.

10. Dispositif de support selon l'une quelconque des revendications 6 à 9, dans lequel le dispositif de support comprend en outre une partie de support adaptée pour fixer un réflecteur et/ou un dispositif d'éclairage.

11. Dispositif de support selon les revendications 7 et 10, dans lequel
le dispositif de support est un dispositif de support arrière ; et
les bras de support sont fixés de manière rigide, par leurs extrémités distales, à un moyeu de roue arrière du vélo.
